# EUROPEAN PATENT SPECIFICATION

(11) **EP 0 680 212 B1**
(45) Date of publication and mention of the grant of the patent: **28.08.2002**
(21) Application number: 95302841.2
(22) Date of filing: 27.04.1995
(51) Int. Cl.: H04N 7/15, H04N 7/14

(54) **Image input device for inputting images of a plurality of subjects by switching image pickup direction**
Bildaufnahmevorrichtung zur Aufnahme von Bildern mehrerer Gegenstände durch Umschaltung der Bildaufnahmerichtung
Dispositif d'entrée d'image pour l'entrée d'images de plusieurs sujets par aiguillage de la direction de prise d'image

(30) Priority: 28.04.1994 JP 11415494; 06.03.1995 JP 4543795
(43) Date of publication of application: 02.11.1995
(73) Proprietor: CANON KABUSHIKI KAISHA, Tokyo (JP)
(72) Inventor: Kawai, Hisashi, c/o Canon Kabushiki Kaisha, Ohta-ku, Tokyo (JP)
(74) Representative: Beresford, Keith Denis Lewis

(56) References cited:
- EP-A- 0 482 521
- US-A- 5 253 286
- US-A- 5 396 287

## Description

### BACKGROUND OF THE INVENTION

### Field of the Invention

The present invention relates to an image input device which inputs images of a plurality of subjects by switching the image pickup direction.

### Description of the Related Art

Such image input devices pick up images of a plurality of subjects, such as documents and persons, with a common camera, the image pickup direction of the camera being switched between a direction for picking up images of persons and a direction for picking up images of documents.

However, once the image pickup has been switched to obtain an image of a person after an image of a document has previously been picked up, it is necessary to reset image pickup conditions, for example, lighting and white balance, in order to pick up an image of a document once again. This operation is very difficult.

### SUMMARY OF THE INVENTION

A concern of the present invention is to provide an image pickup device and method capable of simplifying the operation of picking up images of a plurality of subjects by switching the image pickup direction.

European Patent Specification No EP-A-0482521 discloses a method of automatically controlling an image pickup position by deriving control data from a divided image plane.

According to a first aspect of the present invention, there is provided an image input device as set out in claim 1.

According to a second aspect the invention provides an image input method as set out in claim 7.

These and other features and advantages of the present invention will become more apparent from the following description of the preferred embodiments taken in conjunction with the accompanying drawings.

### BRIEF DESCRIPTION OF THE DRAWINGS

Fig. 1 is a block diagram showing the structure of an image input device according to a first embodiment of the present invention;
Fig. 2 is a perspective view showing the outward appearance of the image input device;
Fig. 3 is a perspective view showing a front panel of the image input device;
Fig. 4 is a block diagram showing the structure of an image input device according to a second embodiment of the present invention;
Fig. 5 is a perspective view showing a front panel of the image input device;
Figs. 6(A) and 6(B) are explanatory views showing the structure of an electric motor; and
Fig. 7 is a block diagram showing the structure of an image input device according to a third embodiment of the present invention.

### DESCRIPTION OF THE PREFERRED EMBODIMENTS

The preferred embodiments of an image input device and method according to the present invention will now be described.

### First Embodiment

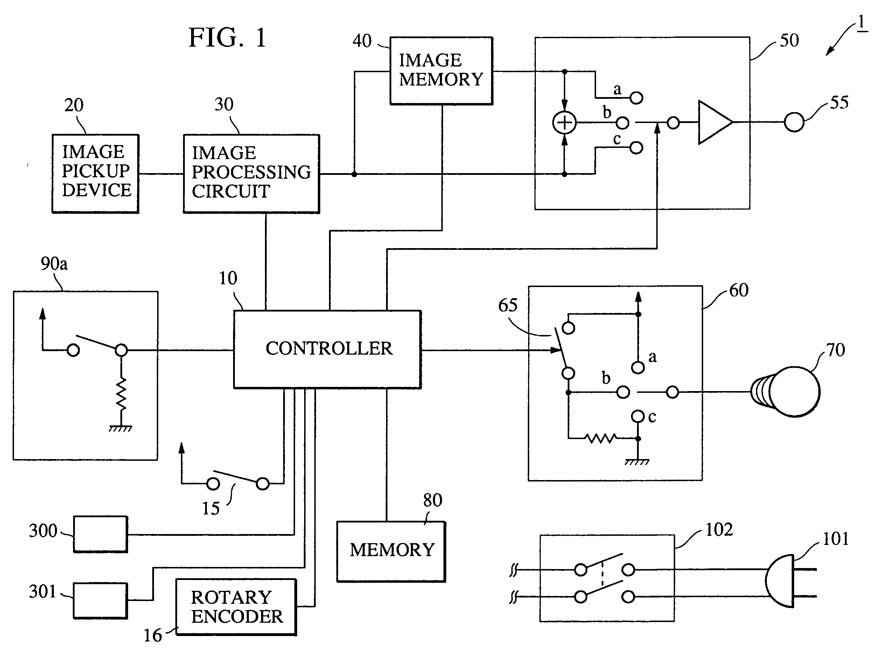

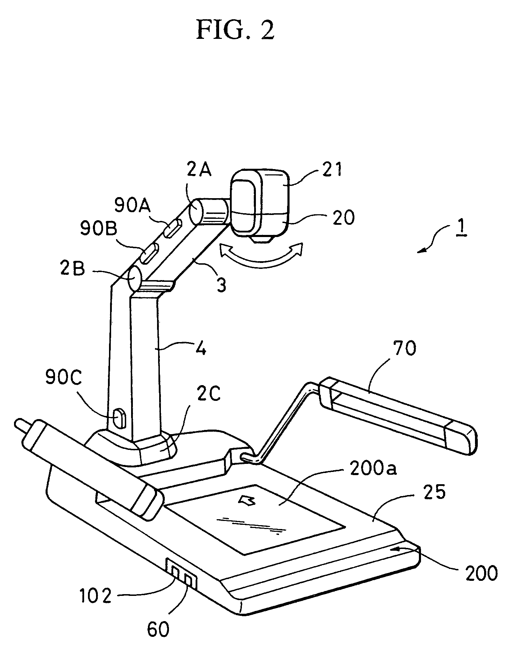

Fig. 1 is a block diagram showing the structure of an image input device according to a first embodiment of the present invention, and Fig. 2 is a perspective view showing the outward appearance of the image input device.

An image input device 1 comprises a controller 10 for controlling the whole device, a trigger switch 15 for allowing an image signal output from an image processing circuit 30 to be stored in an image memory 40, an image pickup device 20 for picking up an image of a document 200a laid on a document table 25, the image processing circuit 30 for sequentially capturing an image signal of the document, which is photoelectrically converted by the image pickup device 20, and applying signal processing to the amplitude, white balance, frequency characteristics and the like of the image signal, and an image memory 40 to which an output signal of the image processing circuit 30 is input and which temporarily stores the input signal in response to a trigger signal from the controller 10.

The image input device 1 further comprises a picture selection circuit 50 to which output signals from the image processing circuit 30 and the image memory 40 are input and which selects a memory image from the image memory 40, a pickup image of the image pickup device 20 from the image processing circuit 30 or a composite image of the memory image and the pickup image according to a control signal from the controller 10, an image output terminal 55 for outputting an image signal of the image selected by the picture selection circuit 50 to an external device, and a light 70 for illuminating the document table 25 and the document 200a laid thereon.

The image input device 1 further comprises a switch 65 which opens and closes in response to a control signal from the controller 10, a switch circuit 60 for supplying power to the light 70 depending on the selection through an external operation switch, a memory 80 for storing various set constants of the image input device 1, an angle lock detection switch 90a for finding that the image pickup device 20 is locked at a document image pickup angle of the image input device 1, a power plug 101, and a power switch 102. The angle of the image pickup device 20 is changed in correlation to the turning of a turning portion 2A by pressing a first control button 90A. A column 3 is pivoted in correlation to the turning of a turning portion 2B by pressing a second control button 90B. Furthermore, a column 4 is turned in correlation to the turning of a turning portion 2C by pressing a third control button 90C. These turnings allow the columns 3 and 4 to be folded.

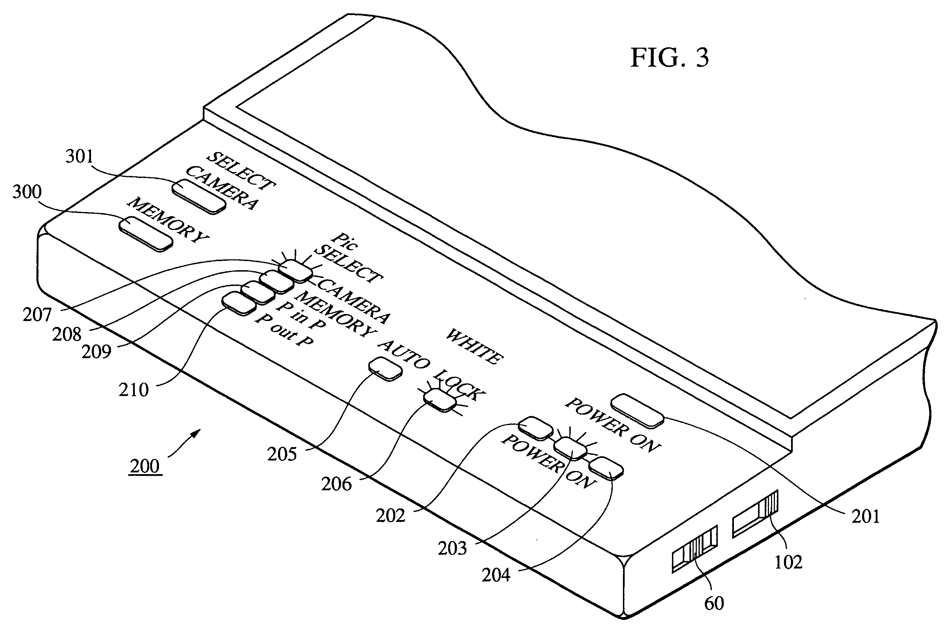

Fig. 3 is a perspective view showing a front panel of the image input device 1. Referring to Fig. 3, the front panel 200 comprises a power LED 201 which lights up when the power switch 102 is thrown, and display LEDs 202, 203 and 204 each indicate the state of the light 70 selected by the switch circuit 60. Display LED 202 indicates that a mode to always light up the light 70 is selected when the power is on in a state in which a contact a of the switch circuit 60 is selected. Display LED 203 indicates a state in which a contact b of the switch circuit 60 is selected, and the lighting and shutoff thereof is controlled by the switch 65. Display LED 204 indicates that a contact c of the switch circuit 60 is selected, that is, that the light 70 is always shut off. An LED 205 indicates an automatic homing state of white balance, that is, that a white balance mode is selected, and an LED 206 indicates that the white balance is locked in a predetermined state. LEDs 207 to 210 each indicate a state selected by the output image selection circuit 50. An LED 207 indicates that the image pickup device 20 is in a person image pickup state, an LED 208 indicates a state in which an output image of the image memory 40 is being output, an LED 209 indicates that a composite image, which is being output, is in picture-in-picture (P in P) form, and an LED 210 indicates that the output composite image is in picture-out-picture (P out P) form.

The operation of the image input device 1 will now be described. In order to use the image pickup device 20 as a camera to pick up an image of a document, an operator puts the power plug 101 into a commercial power receptacle and turns on the power switch 102.

The state before the power is turned on will be described next. Since the image pickup device 20 is used as a camera for picking up an image of a document, before the power switch 102 is thrown, the turning motion of the turning portion 2A is locked. Therefore, the angle lock detection switch 90a is in conduction. A document image pickup mode is selected in the switch circuit 60, and the contact b is in conduction.

When power is supplied, the controller 10 starts its operation and determines, based on an H-level voltage from the angle lock detection switch 90a, that the turning motion of the turning portion 2A is locked. Furthermore, the controller 10 reads white balance control data for the document image pickup mode, which is previously stored in the memory 80, sends the data to the image processing circuit 30, and sets the white balance at a value for the document image pickup mode. At this time, an H-level white balance lock signal is output to the LED 206, by which the LED 206 is lighted up to indicate that the white balance is locked. Since the angle lock detection switch 90a is on the H-level, the controller 10 closes the switch 65. The light 70 is supplied with power and lighted up.

In this state, the operator can give an explanation while picking up an image of the document 200a. Necessary documents may be stored in the image memory 40 by pressing the memory trigger switch 15. At this time, the controller 10 sets and assigns serial numbers to images of the documents in order of their storage. When the operator finishes the image pickup operation of the document 200a and changes the angle of the image pickup device 20, that is, turns the turning portion 2A by pressing the first control button 90A in order to use the image pickup device 20 as a camera to pick up an image of a person, the angle lock detection switch 90a is released and opened, and therefore, an output signal of the angle lock detection switch 90a is changed to an L level. In short, an output signal of the angle lock detection circuit 90a is changed to an L level by pressing the first control button 90A.

In response to the change in voltage of the angle lock detection switch 90a, the controller 10 stores an image of the document 200a, laid on the document table 25, in the image memory 40 just before the first control button 90A is pressed, and opens the switch 65, thereby shutting the light 70 off.

In addition, the controller 10 releases the white balance lock of the image processing circuit 30 and selects an automatic white balance state. At this time, the LED 206 for indicating that the white balance is locked is shut off, and the LED 205 for indicating that the automatic balance state is selected is lighted up.

Next, when a particular document is required to be displayed again, during, for example, the process of a conference, the operator can switch an output signal of the picture selection circuit 50 to the image signal of the document stored in the image memory 40 by pressing the memory selection switch 300 of the picture select circuit 50. Thus, previously stored documents can be displayed, in order, by pressing the memory selection switch 300. A switch 301 is pressed to switch the output of the image memory 40 to an output of the image pickup device 20.

When the picture selection circuit 50 is switched to a P in P mode, a picture of a person can be displayed while, at the same time displaying an image stored in the image memory 40 within the person's picture and reduced in size. Alternatively, a picture of a person may be displayed in reduced size within the document image stored in the image memory 40. The number of switches can be reduced by making the LEDs double as control switches.

If a rotary encoder 16 is mounted in the turning portion 2A, and it can be verified, based on an output of the encoder 16, that the turning portion 2A is turning, since an image displayed by outputting image data stored in the image memory 40 by the controller 10 is a freeze-frame picture, the image is not less difficult to see than when an image sent from the image pickup device 20 is output as it is. Image data previously stored in the image memory 40 may be output by selecting the memory switch 300 before moving the image pickup device 20.

Since the document 200a is normally laid on the document table 25 with its top side shown by an arrow (shown in Fig. 2), an optical image of the document 200a input to the image pickup device 20 will be upside-down in relation to that of an image of a person. Therefore, in this embodiment, when the image pickup device 20 faces the document table 25, the image processing circuit 30 carries out reverse processing relative to an angle 45° which is formed by the image pickup device 20 and the document table 25. This may be achieved by allowing the image pickup device 20 to turn through at least 180 relative to a base 21.

### Second Embodiment

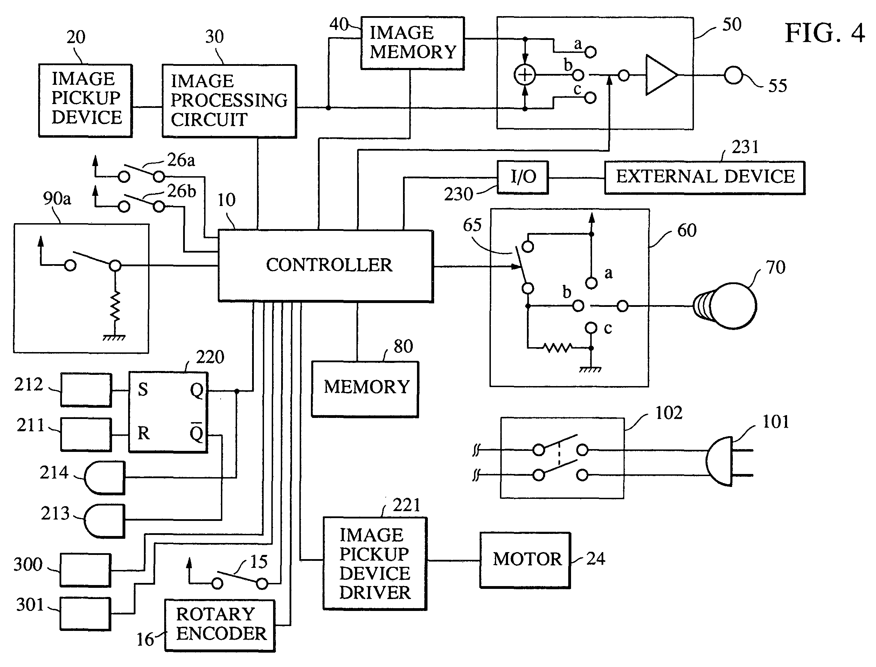

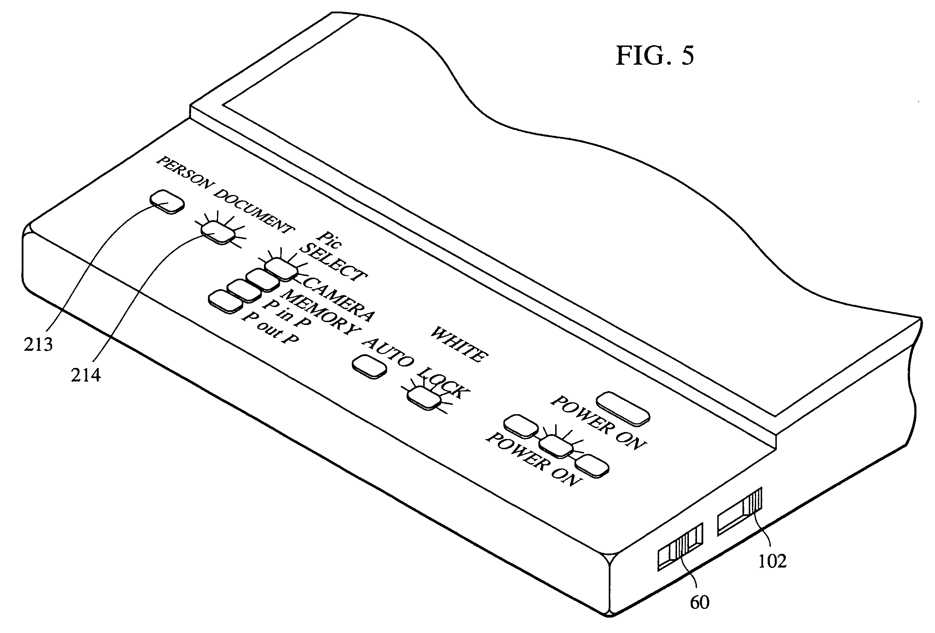

An image input device and method of a second embodiment will now be described. Fig. 4 is a block diagram showing the structure of an image input device of the second embodiment, and Fig. 5 is a perspective view showing a front panel of the image input device. The same components as those in the above first embodiment are denoted by the same numerals, and the explanation thereof is omitted. The image input device further comprises a person selection switch 211 for selecting a person image pickup operation, a document selection switch 212 for selecting a document image pickup operation, an LED 213 which is lighted up in the person image pickup operation, an LED 214 which is lighted up in the document image pickup operation, an image pickup device driver 221 for switching the image pickup direction of an image pickup device 20 corresponding to the document image pickup operation or the person image pickup operation, and a flip-flop circuit 220 to which the document selection switch 212 and the person selection switch 211 are connected. This flip-flop circuit 220 may be used for camera memory selection switches 300 and 301.

In Figs. 4 and 5, the document or person image pickup operation in the image pickup device 20 is selected through selection of the person selection switch 211 or the document selection switch 212 by the operator. The image pickup device 20 is driven by an electric motor and controlled to point in a document image pickup direction and a person image pickup direction.

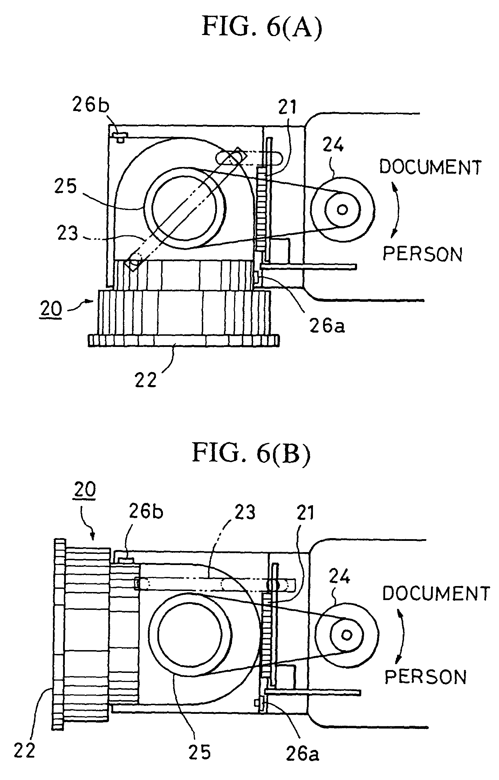

A brief description will now be given with respect to a drive mechanism of the electric motor for switching the image pickup device 20 to a camera for picking up an image of a person or a document. Figs. 6(A) and 6(B) are explanatory views showing the structure of the electric motor. In the image pickup device 20, a CCD 21 is fixed, and an image pickup lens 22, a mirror 23 and the like are driven by an electric motor 24. Referring to Figs. 6(A) and 6(B), when the electric motor 24 rotates counterclockwise, an image pickup lens rotating gear 25 also turns counterclockwise and the image pickup lens 22 points down. The mirror 23 is positioned to form an angle of 45° with the optical axis of the image pickup lens 22, and an optical image incident from the image pickup lens 22 is reflected by the mirror 23 in a right-angled direction, made to enter the CCD 21, and converted into electric signals (see Fig. 6(A)).

When the person image selection switch 211 is depressed, the electric motor 24 is rotated clockwise by the controller 10 through the image pickup device driver 221. In correlation to the rotation, the image pickup lens rotating gear 25 turns clockwise, the image pickup lens 22 points in a horizontal direction, and the mirror 23 slides up and comes out of the optical path of the optical image incident from the image pickup lens 22. The optical image incident from the image pickup lens 22 is made to enter the CCD 21 directly, and is converted into electric signals as image pickup signals (see Fig. 6(B)). In a document image pickup operation, a document camera angle detection switch 26a is turned on by being pressed by the image pickup lens 22, indicating to the controller 10 that the image pickup device 20 is in a document image pickup state. In a person image pickup operation, a person camera angle detection switch 26b is similarly turned on by being pressed by the image pickup lens 22, indicating to the controller 10 that the image pickup device 20 is in a person image pickup state.

Since the controller 10 can thus judge the image pickup state based on a motor control signal, it can store an image of a document, laid on a document table 25, in an image memory 40 just before the document image pickup state is switched to the person image pickup state. The image pickup state can also be detected by switches. This is the same as in the above-mentioned first embodiment. Therefore, when the detection switch 26a is turned off, the controller 10 can connect a switch of a picture selection circuit 50 to a terminal a, select the image memory 40, and output an image signal to an image output terminal 55. When the detection switch 26b is turned on, the switch of the picture selection circuit 50 can be connected to terminal c, and image information from the image pickup device 20 can be directly output to the image output terminal 55. Furthermore, information from the image memory 40 can be output only when a clockwise drive signal of the motor 24 is output. The image pickup device 20 may be driven by an air compressor instead of the electric motor. Still further, the electric motor 24 in the image pickup device 20 may be controlled by a computer 231 as an external device or from a distance location in a videoconference and the like by adding a data input/output circuit 230, for example, utilizing RS-232C.

### Third Embodiment

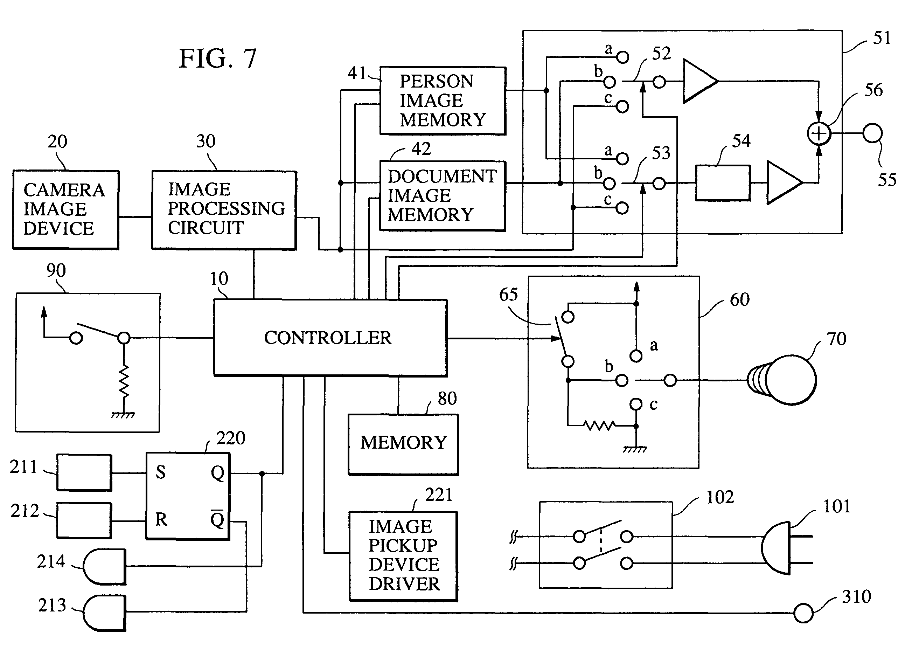

An image input device of a third embodiment will now be described. Fig. 7 is a block diagram showing the structure of an image input device according to the third embodiment. The same components as those in the above first and second embodiments are denoted by the same numerals. Referring to Fig. 7, the image input device further comprises a person image memory 41, a document image memory 42, an output image selector 51, a switch 52 for selecting an output image of the person image memory 41, an output image of the document image memory 42 or an output image of the image processing circuit 30 and outputting the selected image to a main screen, a switch 53 for selecting an output image of the person image memory 41, an output image of the document image memory 42 or an output image of an image processing circuit 30 and outputting the selected image to a subscreen, a subscreen generating circuit 54 for outputting an input image to the subscreen, an adding circuit 56 for composing the main screen and the subscreen, and an image selection signal input terminal 310 for inputting a selection signal, which selects an output image of the person image memory 41, the document image memory 42 or the image processing circuit 30, from the outside into a controller 10.

The operation of the image input device will now be described. In, for example, a simple videoconference where documents are used, pictures of conferees are stored from the image selection signal input terminal 310 in the person image memory 41 in advance of the conference in correspondence to the name of the conferees. An operator projects documents while proceeding with the conference, and stores the documents in the document image memory 42 as occasion demands. For example, in a device which fixes a document onto a document table 25 by static electricity, it is possible as an application of the above-mentioned embodiment to capture the document into the document image memory 42 in correlation to the turning-on of a switch for generating static electricity.

When one of the conferees speaks during the explanation of documents in the conference, the speaker is pinpointed by a means for speaker discrimination, the document image memory 42 is directed to output a freeze-frame picture of the speaker, and an output signal is selected by the switch 53. Furthermore, the picture is reduced to about an eighth by the subscreen generating circuit 54, combined with an image of the document, output from an image output terminal 55, and displayed on a monitor or sent and displayed on the other videoconference terminal, by which it is possible to know, in either conference room, who is now speaking.

As described above, when the image input device of this embodiment is used in a system, such as a videoconference, a speaker is detected by a speaker discrimination method based on the volume of a plurality of microphones and the time difference among signals while an image of a document is being projected, and a freeze-frame picture corresponding to the detected speaker, which is temporarily stored in the person document memory 41 in advance, is displayed on a subscreen or in picture-out-picture form through the image selection signal input terminal 310. Therefore, it is possible to let conferees in the other conference room know who is presently speaking, and to achieve a smooth conference with a simple device.

Components of the first and second embodiments shown in Figs. 1 and 4, which are omitted in Fig. 7, may be located in the third embodiment to perform a similar operation.

In the above-mentioned embodiments, an image signal of a subject whose image is picked up by an image pickup means is output, the image pickup direction of the image pickup means is switched by an image pickup direction switching means, the angle of the image pickup direction is detected by an angle detecting means when images of a plurality of subjects are picked up by the image pickup means by switching the image pickup direction, and the image signal is stored in a storage means according to the detected angle. Therefore, even if image pickup is switched to obtain an image of a person after an image of a document is picked up, it is necessary only to output the image signal stored in the storage means in order to pick up an image of the document again. Troublesome operations of resetting image pickup conditions, for example, controlling lighting and the white balance, can be omitted, and therefore, there is no need to suspend a conference.

Since a lock detection means finds that the image pickup direction is fixed and the storage means stores the image signal at the detection, it is possible to avoid the difficulty of finding that the image pickup direction is fixed and to enhance operability.

Since the image pickup direction of the image pickup means is changed by a driver and the storage means stores the image signal according to a signal for driving the driver, it is possible to avoid the difficulty of manually changing the image pickup direction of the image pickup means and selecting storage, and to enhance operability.

Since the storage means stores the image signal when the image pickup means is switched from the document image pickup direction to the person image pickup direction, it is possible to avoid the difficulty of selecting storage, and to enhance operability.

The image signal input from the image pickup means is stored in the storage means by a trigger switch, the numbers of image signals stored by the trigger switch are set in order by a number setting means, the set numbers are synthesized with the image signal, and the synthesized image signal is displayed by a display means. Therefore, display patterns can be improved.

Since a storage area for storing the image signal is switched according to the angle detected by the angle detection means, it is possible to avoid the difficulty of detecting the angle, and to enhance operability.

## Claims

1. An image input device comprising:
image pick-up means (20) for picking up the image of a subject and outputting an image signal corresponding to the picked-up image; and
image pick-up direction switching means (2a) for switching the image pick-up direction of said image pick-up means so that a plurality of subjects can be picked up;
wherein the device further comprises means (25) for supporting a document the image of which is to be picked-up; detection means (90a) for detecting whether or not the image pick-up direction of the image pick-up means is fixed at a first angle with respect to the document holding means at which angle the image pick-up means can pick-up an image of a document mounted on said document holding means or at another angle for picking-up an image of a person; storage means (40) for storing the image signals of a plurality of documents read when the pick-up means is at said first angle as determined by said detection means; and control means (10) adapted to read out image signals stored in said storage means when the image pick-up direction of said image pick-up means is at said another angle.

2. A device according to claim 1, further comprising:
driving means (24) for changing the image pickup direction of said image pickup means;
wherein said storage means is adapted to store an image signal when a signal for driving said driving means is applied to cause said driving means to move from said first angle.

3. A device according to claim 1 or claim 2, wherein said storage means has at least two areas for storing an image signal, and
said control means (10) is adapted to switch between said storage areas for storing image signals in different areas in accordance with different angles as detected by said detection means.

4. A device according to any preceding claim, further comprising:
a switch (15) for storing in said storage means the image signal output from said image pickup means; and
assigning means (10) for assigning a number to each image signal stored by operation of said switch.

5. A device according to any preceding claim and including switch means (300) whereby image signals stored in said storing means can be output in order.

6. A device according to any preceding claim, wherein said control means is adapted to output an image signal stored by said storing means together with an image of a person picked-up when said image pick-up means are at said another angle.

7. A method of inputting images comprising:
utilising image pick-up means (20) to pick up the images of subjects and outputting image signals corresponding to the picked-up images, the method comprising respectively switching the image pick-up direction of said image pick-up means for images of people and for images of documents;
detecting whether or not the image pick-up direction of the image pick-up means is fixed at a first angle with respect to a document holding means so that the image pick-up means picks up an image of a document mounted on said document holding means or at another angle for picking-up an image of a person; storing in storage means (40) the image signals of a plurality of documents read when the pick-up means is at said first angle as determined by said detection; and reading out image signals stored in said storage means when the image pick-up direction of said image pick-up means is at said another angle.

8. A method according to claim 7, further comprising:
utilising driving means (24) to change the image pickup direction of said image pickup means;
wherein said storage means stores an image signal when a signal for driving said driving means is applied which causes said driving means to move from said first angle.

9. A method according to claim 7 or claim 8, wherein said storage means has at least two areas for storing an image signal, and including switching between said storage areas for storing image signals in different areas in accordance with different angles as detected by said detection means.

10. A method according to any one of claims 7 to 9, further comprising:
utilising a switch (15) to store in said storage means an image signal output from said image pickup means; and
assigning a number to each image signal stored by operation of said switch.

11. A method according to any one of claims 7 to 10, including outputting image signals stored in said storing means in order using switch means (300).

12. A method according to any one of claims 7 to 11, including outputting a stored image signal together with an image of a person picked-up when said image pick-up means are at said another angle.

## Patentansprüche

1. Bildeingabevorrichtung mit:
einer Bildaufnahmeeinrichtung (20) zur Aufnahme des Bildes eines Objekts und zur Ausgabe eines dem aufgenommenen Bild entsprechenden Bildsignals; und
einer Bildaufnahmerichtungsschalteinrichtung (2a) zum Schalten der Bildaufnahmerichtung der Bildaufnahmeeinrichtung, so dass eine Vielzahl von Objekten aufgenommen werden kann;
wobei die Vorrichtung ferner umfasst:
eine Einrichtung (25) zum Halten eines Dokuments, dessen Bild aufzunehmen ist;
eine Erfassungseinrichtung (90a) zur Erfassung, ob die Bildaufnahmerichtung der Bildaufnahmeeinrichtung in Bezug auf die Dokumentenhalteeinrichtung bei einem ersten Winkel, bei dem die Bildaufnahmeeinrichtung ein Bild eines an der Dokumentenhalteeinrichtung angebrachten Dokuments aufnehmen kann, oder bei einem weiteren Winkel zur Aufnahme eines Bildes einer Person fixiert ist oder nicht;
eine Speichereinrichtung (40) zur Speicherung der Bildsignale einer Vielzahl von Dokumenten, die gelesen werden, wenn sich die Aufnahmeeinrichtung auf dem ersten Winkel gemäß der Bestimmung durch die Erfassungseinrichtung befindet; und
eine Steuereinrichtung (10), die dafür eingerichtet ist, die in der Speichereinrichtung gespeicherten Bildsignale auszulesen, wenn sich die Bildaufnahmerichtung der Bildaufnahmeeinrichtung bei dem weiteren Winkel befindet.

2. Vorrichtung gemäß Anspruch 1, ferner mit:
einer Antriebseinrichtung (24) zur Änderung der Bildaufnahmerichtung der Bildaufnahmeeinrichtung;
wobei die Speichereinrichtung eingerichtet ist, ein Bildsignal zu speichern, wenn ein Signal zum Antreiben der Antriebseinrichtung angelegt ist, um die Antriebseinrichtung zu einer Bewegung von dem ersten Winkel weg zu veranlassen.

3. Vorrichtung gemäß Anspruch 1 oder 2, wobei die Speichereinrichtung über zumindest zwei Bereiche zum Speichern eines Bildsignals verfügt, und
die Steuereinrichtung (10) eingerichtet ist, zwischen den Speicherbereichen zur Speicherung von Bildsignalen in verschiedenen Bereichen gemäß den von der Erfassungseinrichtung erfassten verschiedenen Winkeln zu schalten.

4. Vorrichtung gemäß einem der vorstehenden Ansprüche, ferner mit:
einem Schalter (15) zur Speicherung der Bildsignalausgabe von der Bildaufnahmeeinrichtung in der Speichereinrichtung; und
einer Zuweisungseinrichtung (10) zur Zuweisung einer Zahl zu einem jeden durch den Betrieb des Schalters gespeicherten Bildsignal.

5. Vorrichtung gemäß einem der vorstehenden Ansprüche und mit einer Schalteinrichtung (300), wodurch in der Speichereinrichtung gespeicherte Bildsignale geordnet ausgegeben werden können.

6. Vorrichtung gemäß einem der vorstehenden Ansprüche, wobei die Steuereinrichtung darauf eingerichtet ist, ein von der Speichereinrichtung gespeichertes Bildsignal zusammen mit einem Bild einer Person auszugeben, das bei Anordnung der Bildaufnahmeeinrichtung bei dem weiteren Winkel aufgenommen ist.

7. Verfahren zum Aufnehmen von Bildern mit den Schritten:
Verwenden einer Bildaufnahmeeinrichtung (20) zum Aufnehmen der Bilder von Objekten und zum Ausgeben von Bildsignalen entsprechend den aufgenommenen Bildern, wobei das Verfahren jeweils den Schritt zum Schalten der Bildaufnahmerichtung der Bildaufnahmeeinrichtung für Bilder von Personen und für Bilder von Dokumenten umfasst;
Erfassen, ob die Bildaufnahmerichtung der Bildaufnahmeeinrichtung in Bezug auf eine Dokumentenhalteeinrichtung bei einem ersten Winkel, so dass die Bildaufnahmeeinrichtung ein Bild eines an der Dokumentenhalteeinrichtung angebrachten Dokuments aufnimmt, oder bei einem weiteren Winkel zum Aufnehmen eines Bildes einer Person fixiert ist oder nicht;
Speichern der Bildsignale einer Vielzahl von Dokumenten in einer Speichereinrichtung (40), die bei Anordnung der Bildaufnahmeeinrichtung bei dem durch die Erfassung bestimmten ersten Winkel gelesen werden; und
Auslesen von in der Speichereinrichtung gespeicherten Bildsignalen, wenn sich die Bildaufnahmerichtung der Bildaufnahmeeinrichtung bei dem weiteren Winkel befindet.

8. Verfahren gemäß Anspruch 7, ferner mit dem Schritt:
Verwenden einer Antriebseinrichtung (24) zur Änderung der Bildaufnahmerichtung der Bildaufnahmeeinrichtung;
wobei die Speichereinrichtung bei Anlegen eines Signals zum Antreiben der Antriebseinrichtung ein Bildsignal speichert, das die Antriebseinrichtung veranlasst, eine Bewegung von dem ersten Winkel weg vorzunehmen.

9. Verfahren gemäß Anspruch 7 oder 8, wobei die Speichereinrichtung über zumindest zwei Bereiche zur Speicherung eines Bildsignals verfügt, und mit dem Schritt zum Schalten zwischen den Speicherbereichen zur Speicherung von Bildsignalen in verschiedenen Bereichen gemäß verschiedenen von der Erfassungseinrichtung erfassten Winkeln.

10. Verfahren gemäß einem der Ansprüche 7 bis 9, ferner mit den Schritten:
Verwenden eines Schalters (15) zur Speicherung einer Bildsignalausgabe von der Bildaufnahmeeinrichtung in der Speichereinrichtung; und
Zuweisen einer Zahl zu jedem durch den Betrieb des Schalters gespeicherten Bildsignal.

11. Verfahren gemäß einem der Ansprüche 7 bis 10, mit dem Schritt zum geordneten Ausgeben von in der Speichereinrichtung gespeicherten Bildsignalen unter Verwendung der Schalteinrichtung (300).

12. Verfahren gemäß einem der Ansprüche 7 bis 11, mit dem Schritt zum Ausgeben eines gespeicherten Bildsignals zusammen mit einem Bild einer Person, das aufgenommen wird, wenn sich die Bildaufnahmeeinrichtung bei dem weiteren Winkel befindet.

## Revendications

1. Dispositif d'entrée d'image, comprenant :
un moyen (20) de prise d'image pour prendre l'image d'un sujet et délivrer un signal d'image correspondant à l'image prise ; et
un moyen (2a) de commutation de direction de prise d'image pour commuter la direction de prise d'image dudit moyen de prise d'image de telle sorte qu'une pluralité de sujets peuvent être pris ;
dans lequel le dispositif comprend en outre un moyen (25) pour supporter un document dont l'image doit être prise ; un moyen (90a) de détection pour détecter si la direction de prise d'image du moyen de prise d'image est ou non fixée à un premier angle par rapport au moyen de maintien de document, angle auquel le moyen de prise d'image peut prendre une image d'un document monté sur ledit moyen de maintien de document, ou à un autre angle pour prendre une image d'une personne ; un moyen (40) de stockage pour stocker les signaux d'image d'une pluralité de documents lus lorsque le moyen de prise est audit premier angle tel que déterminé par ledit moyen de détection ; et un moyen (10) de commande apte à lire des signaux d'image stockés dans ledit moyen de stockage lorsque la direction de prise d'image dudit moyen de prise d'image est audit autre angle.

2. Dispositif selon la revendication 1, comprenant en outre :
un moyen (24) d'entraînement pour changer la direction de prise d'image dudit moyen de prise d'image ;
dans lequel ledit moyen de stockage est apte à stocker un signal d'image lorsqu'un signal pour attaquer ledit moyen d'entraînement est appliqué afin de conduire ledit moyen d'entraînement à se déplacer à partir dudit premier angle.

3. Dispositif selon la revendication 1 ou la revendication 2, dans lequel ledit moyen de stockage comporte au moins deux zones pour stocker un signal d'image, et
ledit moyen (10) de commande est apte à commuter entre lesdites zones de stockage pour stocker des signaux d'image dans différentes zones en fonction de différents angles comme détecté par ledit moyen de détection.

4. Dispositif selon l'une quelconque des revendications précédentes, comprenant en outre :
un commutateur (15) pour stocker dans ledit moyen de stockage le signal d'image délivré par ledit moyen de prise d'image ; et
un moyen (10) d'attribution pour attribuer un numéro à chaque signal d'image stocké par un actionnement dudit commutateur.

5. Dispositif selon l'une quelconque des revendications précédentes et comportant un moyen (300) formant commutateur à la suite de quoi des signaux d'image stockés dans ledit moyen de stockage peuvent être délivrés dans l'ordre.

6. Dispositif selon l'une quelconque des revendications précédentes, dans lequel ledit moyen de commande est apte à délivrer un signal d'image stocké par ledit moyen de stockage avec une image d'une personne prise lorsque ledit moyen de prise d'image est audit autre angle.

7. Procédé d'introduction d'image, comprenant :
l'utilisation d'un moyen (20) de prise d'image pour prendre les images de sujets et délivrer des signaux d'image correspondant aux images prises, le procédé comprenant respectivement la commutation de la direction de prise d'image dudit moyen de prise d'image pour des images de personnes et pour des images de documents ;
la détection du fait que la direction de prise d'image du moyen de prise d'image est ou non fixée à un premier angle par rapport à un moyen de maintien de document de telle sorte que le moyen de prise d'image prend une image d'un document monté sur ledit moyen de maintien de document ou à un autre angle pour prendre une image d'une personne ; le stockage dans un moyen (40) de stockage des signaux d'image d'une pluralité de documents lus lorsque le moyen de prise est audit premier angle comme déterminé par ladite détection ; et la lecture de signaux d'image stockés dans ledit moyen de stockage lorsque la direction de prise d'image dudit moyen de prise d'image est audit autre angle.

8. Procédé selon la revendication 7, comprenant en outre :
l'utilisation d'un moyen (24) d'entraînement pour changer la direction de prise d'image dudit moyen de prise d'image ;
dans lequel ledit moyen de stockage stocke un signal d'image lorsqu'un signal pour attaquer ledit moyen d'entraînement est appliqué, qui conduit ledit moyen d'entraînement à se déplacer à partir dudit premier angle.

9. Procédé selon la revendication 7 ou la revendication 8, dans lequel ledit moyen de stockage comporte au moins deux zones pour stocker un signal d'image, et comportant une commutation entre lesdites zones de stockage pour stocker des signaux d'image dans différentes zones en fonction de différents angles comme détecté par ledit moyen de détection.

10. Procédé selon l'une quelconque des revendications 7 à 9, comprenant en outre :
l'utilisation d'un commutateur (15) pour stocker dans ledit moyen de stockage le signal d'image délivré par ledit moyen de prise d'image ; et
l'attribution d'un numéro à chaque signal d'image stocké par un actionnement dudit commutateur.

11. Procédé selon l'une quelconque des revendications 7 à 10, comportant la délivrance de signaux d'image stockés dans ledit moyen de stockage, dans l'ordre, en utilisant un moyen (300) formant commutateur.

12. Procédé selon l'une quelconque des revendications 7 à 11, comportant la délivrance d'un signal d'image stocké avec une image d'une personne prise lorsque ledit moyen de prise d'image est audit autre angle.
